# FASCICULE DE BREVET EUROPEEN

(11) **EP 2 051 404 B1**
(45) Date de publication et mention de la délivrance du brevet: **14.03.2018**
(21) Numéro de dépôt: 08290936.7
(22) Date de dépôt: 06.10.2008
(51) Int. Cl.: H04B 7/155, H04B 5/00

(54) **Point d'accès à un réseau et dispositif de communication sans fil équipant ce point d'accès**
Netzzugangspunkt und drahtlose Anordnung dafür
Access point to a network and wireless communication device therefor

(30) Priorité: 15.10.2007 FR 0707202
(43) Date de publication de la demande: 22.04.2009
(73) Titulaire: SOCIETE FRANCAISE DU RADIO TELEPHONE (SFR), 75015 Paris (FR)
(72) Inventeur: Hamel, Alain, 92200 Neuilly sur Seine (FR)
(74) Mandataire: Beaudouin-Lafon, Emmanuel

(56) Documents cités:
- EP-A- 1 478 106
- EP-A2- 1 071 160
- WO-A1-02/095866
- FR-A- 2 827 721
- US-A1- 2004 176 027

## Description

La présente invention concerne un point d'accès à un réseau et un dispositif de communication sans fil équipant ce point d'accès.

### ARRIERE PLAN DE L'INVENTION

On connaît le développement croissant des offres de communications sans fil avec un réseau de télécommunications, qu'il s'agisse d'un réseau de téléphonie cellulaire ou de communications sur internet par un terminal portable.

Les terminaux portables sont reliés au réseau de télécommunications par des points d'accès comportant un dispositif de communication sans fil. Pour assurer une couverture satisfaisante d'une zone géographique tout en respectant les normes de puissance des dispositifs de communication sans fil, il est nécessaire de multiplier les points d'accès. A cet effet il est connu d'implanter des points d'accès dans des locaux commerciaux, en particulier des restaurants qui offrent ainsi la possibilité à leurs clients d'accéder au réseau de télécommunications internet au moyen de leur ordinateur. Toutefois, dans ce cas, le dispositif de communication est généralement placé dans un point du local tel que les champs rayonnés sont limités par les murs latéraux ainsi que par les obstacles internes au local concerné.

A ce titre, le document EP1478106 enseigne que les vitres délimitant un local peuvent comporter un revêtement pour les rendre imperméables aux rayonnements électromagnétiques. Voir aussi: EP 1071160 (Andrew AG).

### OBJET DE L'INVENTION

Un but de la présente invention est de proposer un point d'accès et un dispositif de communication sans fil permettant d'améliorer la communication téléphonique sans fil à partir d'un dispositif de communication disposé dans une zone délimitée par une vitre.

### RESUME DE L'INVENTION

A cet effet, on propose, selon l'invention, un dispositif de communication sans fil comportant un boîtier renfermant une carte électronique associée à une antenne pour transmettre un rayonnement électromagnétique vers un ou des terminaux de communication, caractérisé en ce que le boîtier est équipé de moyens de fixation à une vitre sur une face de fixation du boîtier configurée pour permettre une transmission d'un rayonnement électromagnétique à travers la face de fixation et à travers la vitre vers un ou des terminaux de communication.

On réalise ainsi une diffusion de signaux vers l'extérieur de la zone délimitée par la vitre de sorte que le point d'accès peut être utilisé non seulement pour mettre des ordinateurs en communication avec un réseau mais également des terminaux portables détenus par des utilisateurs extérieurs à la zone. La face du dispositif de communication opposée à la vitre comporte un écran métallique.

Cet écran assure une réflexion du rayonnement électromagnétique de sorte que le rayonnement électromagnétique auquel sont soumis les occupants de la zone délimitée par la vitre est minimisé et la solidité du boîtier est renforcée tout en conservant un faible poids du boîtier, ce qui permet de le fixer à la vitre par un simple collage.

Ainsi, le dispositif se présente toujours de la même façon à travers une vitre quelle que soit l'orientation qui est donnée au boîtier en fonction de la direction des câbles d'alimentation et de transmission des signaux.

Selon une autre caractéristique avantageuse de l'invention, la face de fixation est associée à un cadre comprenant des segments de profilés en U ayant des ailes s'étendant vers l'intérieur du cadre. Ainsi, on ménage un volume maximal à l'intérieur du boîtier tout en permettant une fixation aisée par collage sur les ailes du cadre.

Selon encore une autre caractéristique avantageuse de l'invention, le cadre est en matière synthétique. En relation avec un écran sur une face du boîtier opposée à la face de fixation, cette caractéristique permet de contrôler le rayonnement électromagnétique diffusé à l'intérieur de la zone de façon à permettre une connexion des appareils présents dans la zone tout en limitant le rayonnement électromagnétique auquel les occupants de la zone sont soumis.

### BREVE DESCRIPTION DES DESSINS

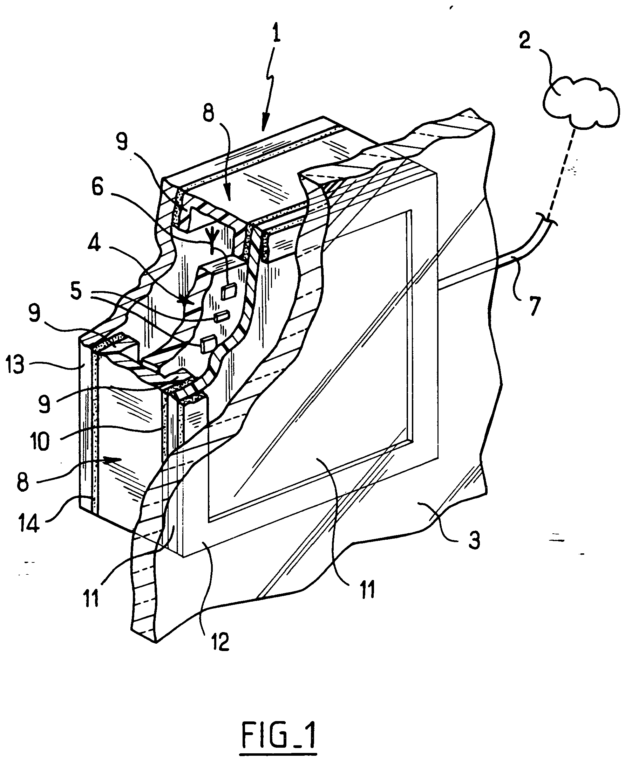

D'autres caractéristiques et avantages de l'invention ressortiront à la lecture de la description qui suit d'un mode de réalisation particulier non limitatif de l'invention, en relation avec la figure unique ci-jointe qui est une vue en perspective partiellement écorchée d'un point d'accès selon l'invention.

### DESCRIPTION DETAILLEE DE L'INVENTION

En référence à la figure, le dispositif de communication 1 selon l'invention est destiné à équiper un point d'accès à un réseau 2 dans une zone délimitée par une vitre 3.

De façon connue en soi le dispositif de communication 1 illustré comporte une carte électronique 4 reliée au réseau par un câble 7 et portant des composants 5. La carte électronique 4 est reliée à une antenne 6 représentée de façon symbolique sur la figure. Si les conditions de fonctionnement le permettent, l'antenne 6 peut également être intégrée à la carte électronique 4. Dans le mode de réalisation illustré, le câble 7 sert à la fois à l'alimentation électrique du dispositif de communication 1 et à la transmission des signaux de données selon une technique connue dénommée POE (abréviation de Power Over Ethernet).

Selon l'invention, la carte électronique 4 est disposée à l'intérieur d'un boîtier qui, selon le mode de réalisation préféré de l'invention, comporte un cadre carré 8 composé de segments en matière synthétique en U comportant des ailes 9 s'étendant vers l'intérieur du cadre.

Sur une face du cadre 8 tournée vers la vitre 3, les ailes 9 sont recouvertes par un adhésif double face 10 sur lequel est appliquée une feuille en matière synthétique 11 formant une face de fixation du dispositif de communication 1 et comportant à cet effet un cadre en colle transparente 12 dont la largeur correspond à la largeur des ailes 9 du cadre 8. Avantageusement, la feuille en matière synthétique 11 peut être transparente ou translucide et le dispositif de communication peut être équipé d'un organe d'éclairage qui souligne par transparence un motif imprimé directement sur la feuille 11 ou rapporté sur celle-ci.

Sur la face opposée à la face de fixation 11, le dispositif de communication comporte un écran métallique 13, par exemple une plaque en aluminium, assurant une réflexion du rayonnement électromagnétique vers la vitre. Dans le mode de réalisation préféré illustré, la plaque en aluminium 13 est fixée par un adhésif double face 14 aux ailes correspondantes 9 du cadre 8.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été décrite avec une fixation du dispositif de communication par collage sur la vitre 3, on peut prévoir de le fixer sur la vitre par d'autres moyens, par exemple par des ventouses, ou même de le fixer simplement à proximité immédiate de la vitre 3 en le suspendant au plafond du local dans lequel il est implanté ou en le fixant latéralement à un mur du local dans lequel il est implanté.

Ainsi qu'il a été mentionné précédemment, la forme carrée du boîtier permet de disposer celui-ci selon différentes orientations sans changer l'apparence du dispositif mais le dispositif selon l'invention peut être également réalisé sous d'autres formes.

## Revendications

1. Dispositif de communication sans fil comportant un boîtier renfermant une carte électronique (4) **caractérisé en ce que** le boitier renferme une antenne (6) associée à la carte électronique pour transmettre un rayonnement électromagnétique vers un ou des terminaux de communication, et **en ce que** le boîtier est équipé de moyens de fixation (12) à une vitre (3) sur une face de fixation du boîtier configurée pour permettre une transmission d'un rayonnement électromagnétique à travers la face de fixation (11) et à travers la vitre (3) vers un ou des terminaux de communication,
et **en ce que** sur une face opposée à la face de fixation (11), le boîtier comporte un écran métallique (13) assurant une réflexion du rayonnement électromagnétique vers la vitre.

2. Dispositif selon la revendication 1, **caractérisé en ce que** l'écran métallique (13) est une plaque en aluminium.

3. Dispositif selon la revendication 1, **caractérisé en ce que** le boîtier comporte un cadre (8) en matière synthétique.

4. Dispositif selon la revendication 1, **caractérisé en ce que** le boîtier est de forme carrée.

5. Dispositif selon la revendication 1, **caractérisé en ce que** le boîtier comporte un cadre (8) comprenant des segments de profilé en U ayant des ailes (9) s'étendant vers l'intérieur du cadre.

6. Dispositif selon la revendication 1, **caractérisé en ce que** la face de fixation (11) est pourvue d'un revêtement adhésif (12).

7. Dispositif selon la revendication 6, **caractérisé en ce que** le revêtement adhésif (12) est réalisé selon un cadre coïncidant avec les ailes (9) en regard.

8. Point d'accès à un réseau de télécommunications (2), comportant un dispositif de communication sans fil (1) disposé dans une zone délimitée par une vitre (3), **caractérisé en ce que** le dispositif de communication (1) est conforme à l'une des revendications précédentes, et est fixé à la vitre (3) pour assurer une transmission de signaux électromagnétiques à travers la vitre (3) vers un ou des terminaux de communication.

## Patentansprüche

1. Drahtlose Kommunikationsvorrichtung, umfassend ein Gehäuse, das eine Leiterplatte (4) enthält, **dadurch gekennzeichnet, dass** das Gehäuse eine Antenne (6) umfasst, die mit der Leiterplatte verbunden ist, um eine elektromagnetische Strahlung zu einem oder mehreren Kommunikationsendgeräten zu übertragen, und dass das Gehäuse mit Befestigungsmitteln (12) zur Befestigung an einer Scheibe (3) auf einer Befestigungsfläche des Gehäuses versehen ist, die so konfiguriert ist, dass sie eine Übertragung einer elektromagnetischen Strahlung durch die Befestigungsfläche (11) und durch die Scheibe (3) zu einem oder mehreren Kommunikationsendgeräten gestattet,
und dass das Gehäuse auf einer Fläche, die der Befestigungsfläche (11) abgewandt ist, eine metallene Abschirmung (13) umfasst, die eine Reflexion der elektromagnetischen Strahlung zur Scheibe sicherstellt.

2. Vorrichtung nach Anspruch 1, **dadurch gekennzeichnet, dass** die metallene Abschirmung (13) eine Aluminiumplatte ist.

3. Vorrichtung nach Anspruch 1, **dadurch gekennzeichnet, dass** das Gehäuse einen Rahmen (8) aus synthetischem Material umfasst.

4. Vorrichtung nach Anspruch 1, **dadurch gekennzeichnet, dass** das Gehäuse eine viereckige Form hat.

5. Vorrichtung nach Anspruch 1, **dadurch gekennzeichnet, dass** das Gehäuse einen Rahmen (8) umfasst, der U-Profil-Segmente enthält, die Schenkel (9) haben, die sich ins Innere des Rahmens erstrecken.

6. Vorrichtung nach Anspruch 1, **dadurch gekennzeichnet, dass** die Befestigungsfläche (11) mit einer Haftbeschichtung (12) versehen ist.

7. Vorrichtung nach Anspruch 6, **dadurch gekennzeichnet, dass** die Haftbeschichtung (12) entsprechend einem Rahmen umgesetzt ist, der mit den gegenüberliegenden Schenkeln (9) zusammenfällt.

8. Zugangspunkt zu einem Telekommunikationsnetz (2), umfassend eine drahtlose Kommunikationsvorrichtung (1), die in einer Zone angeordnet ist, die von einer Scheibe (3) begrenzt ist, **dadurch gekennzeichnet, dass** die Kommunikationsvorrichtung (1) gemäß einem der vorhergehenden Ansprüche ausgebildet und an der Scheibe (3) befestigt ist, um eine Übertragung elektromagnetischer Signale durch die Scheibe (3) hindurch zu einem oder mehreren Kommunikationsendgeräten sicherzustellen.

## Claims

1. Wireless communication device including a housing containing an electronic circuit card (4) **characterised in that** the housing contains an antenna (6) associated with the electronic circuit card to transmit electromagnetic radiation to one or more communication terminals and **in that** the housing is provided with means (12) for securing it to a window (3) on a fixing face of the housing configured to enable transmission of electromagnetic radiation through the fixing face (11) and through the window (3) to one or more communication terminals,
and **in that** the housing has a metal screen (13) on a face opposite the fixing face (11) which reflects the electromagnetic radiation towards the window.

2. Device according to claim 1, **characterised in that** the metal screen (13) is an aluminium plate.

3. Device according to claim 1, **characterised in that** the housing includes a frame (8) made of synthetic material.

4. Device according to claim 1, **characterised in that** the housing is square in shape.

5. Device according to claim 1, **characterised in that** the housing includes a frame (8) comprising U-shaped profile segments having flanges (9) extending towards the interior of the frame.

6. Device according to claim 1, **characterised in that** the fixing face (11) is provided with an adhesive coating (12).

7. Device according to claim 6, **characterised in that** the adhesive coating (12) is produced as a frame coinciding with the facing flanges (9).

8. Access point to a telecommunications network (2), including a wireless communication device (1) arranged in an area delimited by a window (3), **characterised in that** the communication device (1) is a device according to any one of the preceding claims and is fixed to the window (3) to transmit electromagnetic signals through the window (3) to one or more communication terminals.
